# EUROPEAN PATENT SPECIFICATION

(11) **EP 3 735 024 B1**
(45) Date of publication and mention of the grant of the patent: **07.12.2022**
(21) Application number: 17936666.1
(22) Date of filing: 25.12.2017
(51) Int. Cl.: H04L 67/146, H04W 28/06, H04W 72/12, H04W 28/02, H04W 76/11

(54) **DATA TRANSMISSION METHOD AND DEVICE AND COMPUTER STORAGE MEDIUM**
DATENÜBERTRAGUNGSVERFAHREN UND -VORRICHTUNG UND COMPUTERSPEICHERMEDIUM
PROCÉDÉ ET DISPOSITIF DE TRANSMISSION DE DONNÉES, ET SUPPORT DE STOCKAGE INFORMATIQUE

(43) Date of publication of application: 04.11.2020
(73) Proprietor: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan, Guangdong 523860 (CN)
(74) Representative: Novagraaf Technologies
(86) International application number: PCT/CN2017/118346
(87) International publication number: WO 2019/126955

(56) References cited:
- CN-A- 101 651 510
- CN-A- 102 761 905
- CN-A- 106 027 211
- CN-A- 107 222 890
- US-A1- 2005 073 974
- SAMSUNG: "NR QOS model for UL and DL", 3GPP DRAFT; R2-168057 NR QOS MODEL FOR UL AND DL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20161114 - 20161118 13 November 2016 (2016-11-13), XP051177755, Retrieved from the Internet: URL:http://www.3gpp.org/ftp/Meetings_3GPP_ SYNC/RAN2/Docs/ [retrieved on 2016-11-13]
- INTEL CORPORATION: "Relationship between DRBs and QoS flows", 3GPP DRAFT; R2-166892-QOS-DRB-V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Kaohsiung; 20161010 - 20161014 9 October 2016 (2016-10-09), XP051151332, Retrieved from the Internet: URL:http://www.3gpp.org/ftp/Meetings_3GPP_ SYNC/RAN2/Docs/ [retrieved on 2016-10-09]

## Description

### TECHNICAL FIELD

The present disclosure relates to the technical field of wireless communication, and more particularly, to wireless data transmission methods, a device, and a computer storage medium.

### BACKGROUND

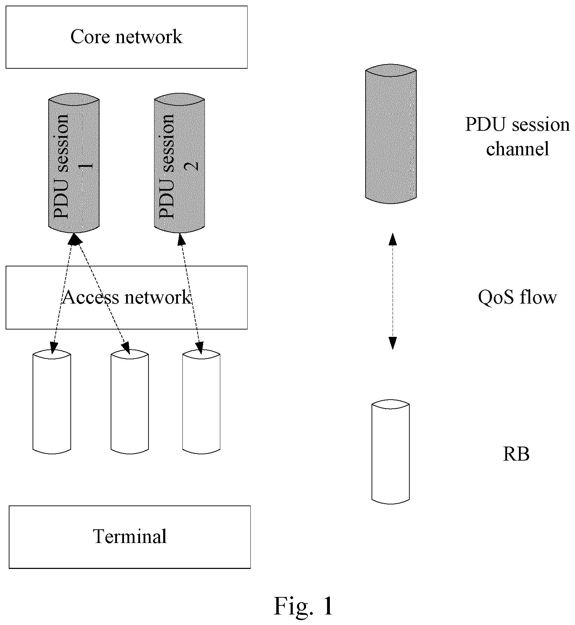

In the 5^{th} generation (5G) system, each terminal can establish one or more Protocol Data Unit (PDU) sessions, and each PDU session can include multiple Quality of Service flow (QoS flow), where the QoS flow is uniquely identified in the PDU session. As shown in Fig. 1, in a connection between an access network and a core network, a channel is allocated for each PDU session, which is called a PDU session channel.

In the related art, after the access network receives data sent by the terminal, it can identify which QoS flow the data belongs to, but cannot identify which PDU session the data belongs to, resulting in that the access network does not know which channel should the data to be submitted to. Similarly, when the terminal receives the data sent by the access network, it cannot identify which PDU session the data belongs to, which results in that the terminal does not know which IP entity should the data to be submitted to.

SAMSUNG: "NR QOS model for UL and DL", 3GPP DRAFT; R2-168057 NR QOS MODEL FOR UL AND DL , 3RD GENERATION PARTNERSHIP PROJECT (3GPP), MOBILE COMPETENCE CENTRE; 650, ROUTE DES LUCIOLES; F-06921 SOPHIA-ANTI POLIS CEDEX; FRANCE, vol. RAN WG2, no. Reno, USA; 20161114-20161118 13 November 2016 (2016-11-13), XP051177755 discloses building an overall NR RAN QOS model for both downlink and uplink.

INTEL CORPORATION: "Relationship between DRBs and QoS flows", 3GPP DRAFT; R2-166892-QOS-DRB-V1, 3RD GENERATION PARTNERSHIP PROJECT (3GPP), MOBILE COMPETENCE CENTRE; 650, ROUTE DES LUCIOLES; F-06921 SOPHIA-ANTI POLIS CEDEX; FRANCE, vol. RAN WG2, no. Kaohsiung; 20161010-20161014 9 October 2016 (2016-10-09), XP051151332 discloses the relationship between DRBS and QoS flows.

### SUMMARY

The invention is set out in the appended set of claims. To solve the above technical problems, embodiments of the present disclosure provideadata transmission methods, a device, and
a computer storage medium.

### BRIEF DESCRIPTION OF THE DRAWINGS

The drawings described here are used to provide a further understanding of the present disclosure and constitute a part of the present application. The schematic embodiments of the present disclosure and the descriptions thereof are used to explain the present disclosure, and do not constitute an improper limitation on the present disclosure. In the drawings:
Fig. 1 is a schematic diagram of a PDU session channel;
Fig. 2 is a system architecture diagram of a 5G network according to an embodiment of the present disclosure;
Fig. 3 is a first schematic flowchart of a data transmission method according to an embodiment of the present disclosure;
Fig. 4 is a second schematic flowchart of a data transmission method according to an embodiment of the present disclosure;
Fig. 5 is a structural composition diagram of a data transmission device according to an embodiment of the present disclosure; and
Fig. 6 is a structural composition diagram of a computer device according to an embodiment of the present disclosure.

### DETAILED DESCRIPTION

The scope of this invention is defined by the appended claims. Further embodiments of the invention are defined by the dependent claims. The embodiments relating to determining the PDU session corresponding to the data based on the identification information of the PDU session, which do not fall within the scope of the appended claims, are to be interpreted as example embodiments or background information useful only for understanding the invention. In order to understand the features and technical contents of the embodiments of the present disclosure in more detail, the implementation of the embodiments of the present disclosure will be described in detail below with reference to the accompanying drawings. The accompanying drawings are for reference only and are not intended to limit the embodiments of the present disclosure.

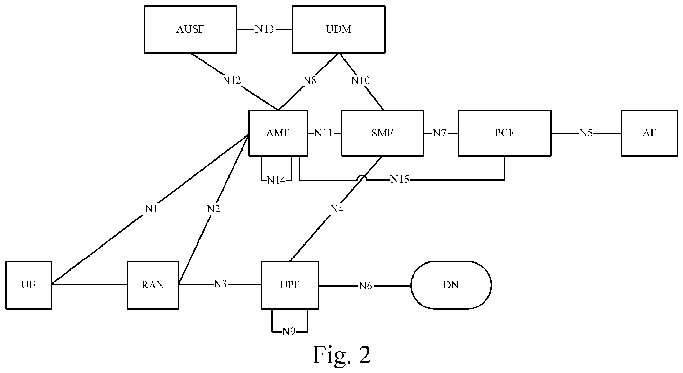

Fig. 2 is a system architecture diagram of a 5G network according to an embodiment of the present disclosure. As shown in Fig. 2, the equipment involved in the 5G network system includes:

User Equipment (UE), Radio Access Network (RAN), User Plane Function (UPF), Data Network (DN), Receive Core Access and Mobility Management Function (AMF), Session Management Function (SMF), Policy Control Function (PCF), Application Function (AF), Authentication Server Function (AUSF), and Unified data management (UDM).

In the 5G system, each UE can establish one or more PDU sessions, and each PDU session can include multiple QoS flows.

The above Fig. 2 is only an example of a network architecture for implementing the embodiment of the present disclosure, and the embodiment of the present disclosure is not limited to the network structure described in Fig. 2.

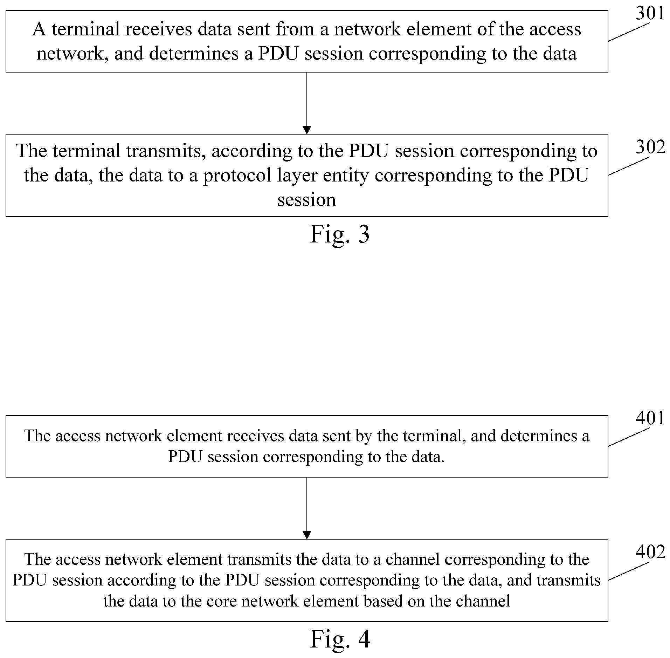

Fig. 3 is a first flowchart of a data transmission method according to an embodiment of the present disclosure. As shown in Fig. 3, the data transmission method includes the following steps.

In step 301: the terminal receives data sent by an access network element, and determines a PDU session corresponding to the data.

In the embodiment of the present disclosure, the terminal may be any device that can communicate with the network, such as a mobile phone, a tablet computer, a notebook computer, and a desktop computer.

In the embodiment of the present disclosure, when downlink data is sent by the access network element to the terminal, the data carries association information of the PDU session. Here, the association information of the PDU session includes at least one of the following: identification information of the PDU session (not part of the invention), address information of the PDU session and identification information of the QoS flow.

Based on this, when the terminal receives the data sent by the access network element, the terminal extracts the association information of the PDU session from the data; and the terminal determines the PDU session corresponding to the data based on the association information of the PDU session.

The following describes how to determine the PDU session corresponding to the data in combination with different implementations of the association information of the PDU session.
1) The association information of the PDU session is the identification information of the PDU session (not part of the invention).
   When the terminal receives data sent by the access network element, the terminal determines the PDU session corresponding to the data based on the identification information of the PDU session.
2) The association information of the PDU session is the address information of the PDU session.

When the terminal receives the data sent by the access network element, the terminal determines the PDU session corresponding to the data based on a corresponding relationship between the address information of the PDU session and the PDU session.

For example, the terminal receives an IP data packet sent by the access network element, determines the corresponding PDU session according to the address information in the IP data packet, and then submits the IP data packet to a corresponding high layer entity (such as an IP entity).

3) The association information of the PDU session is the identification information of the QoS flow.

When the terminal receives the data sent by the access network element, the terminal determines the PDU session corresponding to the data based on a corresponding relationship between the identification information of the QoS flow and the PDU session.

In the above solutions, the corresponding relationship between the address information of the PDU session and the PDU session involved in 2) can be determined in the following manners.

In a first manner (negotiation and configuration): when establishing or modifying a PDU session, the terminal, the access network element, and a core network element negotiate and configure a following corresponding relationship: the corresponding relationship between the address information of the PDU session and the PDU session.

Here, the specific process of negotiation and configuration may be: 1) the terminal configures the corresponding relationship, and sends the configured corresponding relationship to the access network element and the core network element; or, 2) the terminal receives the corresponding relationship configured by the access network element or the core network element.

In a second manner (agreement in a protocol): the terminal determines a following corresponding relationship based on a preset protocol: the corresponding relationship between the address information of the PDU session and the PDU session.

Similarly, in the above solutions, the corresponding relationship between the QoS flow identification information and the PDU session involved in 3) can be determined in the following manners.

In a first manner (negotiation and configuration): when establishing or modifying a PDU session, the terminal, the access network element, and the core network element negotiate and configure a following corresponding relationship: the corresponding relationship between the QoS flow identification information and the PDU session.

Here, the specific process of negotiation and configuration may be: 1) the terminal configures the corresponding relationship, and sends the configured corresponding relationship to the access network element and the core network element; or, 2) the terminal receives the corresponding relationship configured by the access network element or the core network element.

In a second manner (agreement in the protocol): the terminal determines a following corresponding relationship based on a preset protocol: the corresponding relationship between the identification information of the QoS flow and the PDU session.

In step 302: the terminal transmits the data to a protocol layer entity corresponding to the PDU session according to the PDU session corresponding to the data.

Here, after the terminal determines the PDU session corresponding to the data, the terminal transmits the data to the protocol layer entity corresponding to the PDU session. Here, the protocol layer entity is a high layer entity (as opposed to a low layer entity for receiving data), such as an IP entity or a SMSF entity.

Fig. 4 is a second flowchart of a data transmission method according to an embodiment of the present disclosure. As shown in Fig. 4, the data transmission method includes the following steps.

In step 401: the access network element receives data sent by the terminal, and determines a PDU session corresponding to the data.

In the embodiment of the present disclosure, when the terminal sends uplink data to the access network element, the data carries the association information of the PDU session. Here, the association information of the PDU session includes at least one of the following: identification information of the PDU session, address information of the PDU session and identification information of the QoS flow.

Based on this, when the access network element receives data sent by the terminal, the access network element extracts the association information of the PDU session from the data; and the access network element determines the PDU session corresponding to the data based on the association information of the PDU session.

The following describes how to determine the PDU session corresponding to the data in combination with different implementations of the association information of the PDU session.
1) The association information of the PDU session is the identification information of the PDU session (not part of the invention).
   When the access network element receives the data sent by the terminal, the access network element determines the PDU session corresponding to the data based on the identification information of the PDU session.
2) The association information of the PDU session is the address information of the PDU session.

When the access network element receives the data sent by the terminal, the access network element determines the PDU session corresponding to the data based on a corresponding relationship between the address information of the PDU session and the PDU session; or, the access network element determines the PDU session corresponding to the data based on a corresponding relationship between the address information of the PDU session and the PDU session channel, where the PDU session channel corresponds to the PDU session one-to-one.

For example, the access network element receives an IP data packet sent by the terminal, and determines the corresponding PDU session or PDU session channel according to the address information in the IP data packet, and then submits the IP data packet to the corresponding channel.

3) The association information of the PDU session is the identification information of the QoS flow.

When the access network element receives data sent by the terminal, the access network element determines a PDU session corresponding to the data based on the corresponding relationship between the identification information of the QoS flow and the PDU session.

In the above solutions, the corresponding relationship between the address information of the PDU session and the PDU session and the corresponding relationship between the address information of the PDU session and the PDU session channel involved in 2) can be determined in the following manners.

In a first manner (negotiation and configuration): when establishing or modifying a PDU session, the access network element, the terminal and the core network element negotiate and configure at least one of the following corresponding relationships: the corresponding relationship between the address information of the PDU session and the PDU session, and the corresponding relationship between the address information of the PDU session and the PDU session channel.

Here, the specific process of negotiation and configuration may be: 1) the access network element configures the corresponding relationship, and sends the configured corresponding relationship to the terminal and the core network element; or, 2) the access network access element receives the corresponding relationship configured by the terminal or the core network element.

In a second manner (agreement in the protocol): the access network element determines at least one of the following corresponding relationships based on a preset protocol: the corresponding relationship between the address information of the PDU session and the PDU session, and the corresponding relationship between the address information of the PDU session and the PDU session channel.

Similarly, in the above solutions, the corresponding relationship between the identification information of the QoS flow and the PDU session involved in 3) can be determined in the following manners.

In a first manner (negotiation and configuration): when establishing or modifying a PDU session, the access network element, the terminal and the core network element negotiate and configure a following corresponding relationship: the corresponding relationship between the identification information of the QoS flow and the PDU session.

Here, the specific process of negotiation and configuration may be: 1) the access network element configures the corresponding relationship, and sends the configured corresponding relationship to the terminal and the core network element; or, 2) the access network element receives the corresponding relationship configured by the terminal or the core network element.

In a second manner (agreement in the protocol): the access network element determines the following corresponding relationship based on a preset protocol: the corresponding relationship between the identification information of the QoS flow and the PDU session.

In step 402: the access network element transmits the data to a channel corresponding to the PDU session according to the PDU session corresponding to the data, and transmits the data to the core network element based on the channel.

Here, after the access network element determines a PDU session corresponding to the data, the data is transmitted to the channel corresponding to the PDU session.

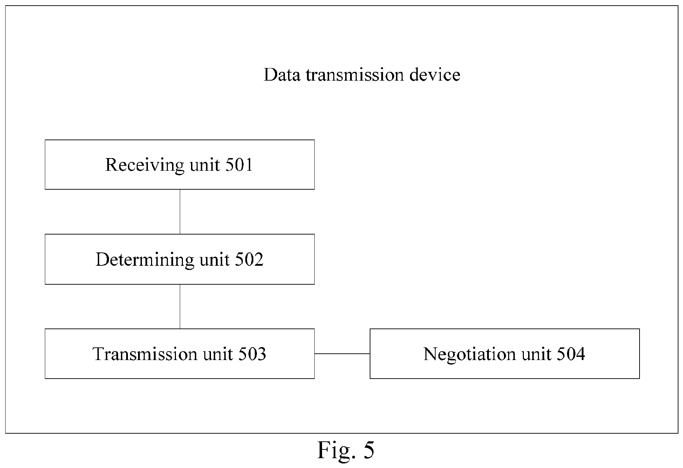

Fig. 5 is a structural composition diagram of a data transmission device according to an embodiment of the present disclosure. The data transmission device in this embodiment may be provided in a terminal or in an access network element at a network side. The following describes the data transmission device in the terminal and the data transmission device in the access network element.
1) The data transmission device in the terminal includes:
   a receiving unit 501, configured to receive data sent by an access network element;
   a determining unit 502, configured to determine a PDU session corresponding to the data; and
   a transmission unit 503, configured to transmit the data to a protocol layer entity corresponding to the PDU session according to the PDU session corresponding to the data.

In an implementation manner, the determining unit 502 is configured to extract association information of the PDU session from the data; and determine the PDU session corresponding to the data based on the association information of the PDU session; where the association information of the PDU session includes at least one of the following:
identification information of the PDU session, address information of the PDU session, and identification information of QoS flow.

In an implementation manner, the association information of the PDU session is the identification information of the PDU session;
the determining unit 502 is configured to determine the PDU session corresponding to the data based on the identification information of the PDU session.

In an implementation manner, the association information of the PDU session is the address information of the PDU session;
the determining unit 502 is configured to determine the PDU session corresponding to the data based on a corresponding relationship between the address information of the PDU session and the PDU session.

In an implementation manner, the association information of the PDU session is the identification information of the QoS flow;
the determining unit 502 is configured to determine the PDU session corresponding to the data based on a corresponding relationship between the identification information of the QoS flow and the PDU session.

In an implementation manner, the device further includes:
a negotiation unit 504, configured to, when establishing or modifying a PDU session, negotiate and configure a corresponding relationship with the access network element and a core network element: the corresponding relationship between the address information of the PDU session and the PDU session.

In an implementation manner, the determining unit 502 is further configured to determine the following corresponding relationship based on a preset protocol: the corresponding relationship between the address information of the PDU session and the PDU session.

In an implementation manner, the device further includes:
a negotiation unit 504, configured to, when establishing or modifying a PDU session, negotiate and configure with the access network element and the core network element, a following corresponding relationship: the corresponding relationship between the identification information of the QoS flow and the PDU session.

In an implementation manner, the determining unit 502 is further configured to determine a following corresponding relationship based on a preset protocol: the corresponding relationship between the identification information of the QoS flow and the PDU session.

In an implementation manner, the negotiation unit 504 is configured to configure the corresponding relationship, and send the configured corresponding relationship to the access network element and the core network element; or, receive the corresponding relationship configured by the network element or the core network element.

In the above solutions, the transmission unit 503 is configured to transmit the data to an IP entity or an SMSF entity corresponding to the PDU session.

2) The data transmission device in the access network element includes:
a receiving unit 501, configured to receive data sent by a terminal;
a determining unit 502, configured to determine a PDU session corresponding to the data; and
a transmission unit 503, configured to transmit the data to a channel corresponding to the PDU session according to the PDU session corresponding to the data, and transmit the data to a core network element based on the channel.

In an implementation manner, the determining unit 502 is configured to extract association information of the PDU session from the data; and determine the PDU session corresponding to the data based on the association information of the PDU session; where the association information of the PDU session includes at least one of the following:
identification information of the PDU session, address information of the PDU session, and identification information of a QoS flow.

In an implementation manner, the association information of the PDU session is the identification information of the PDU session;
the determining unit 502 is configured to determine the PDU session corresponding to the data based on the identification information of the PDU session.

In an implementation manner, the association information of the PDU session is the address information of the PDU session;
the determining unit 502 is configured to determine the PDU session corresponding to the data based on a corresponding relationship between the address information of the PDU session and the PDU session; or, determine the PDU session corresponding to the data based on a corresponding relationship between the address information of the PDU session and a PDU session channel, where the PDU session channel corresponds to the PDU session one by one.

In an implementation manner, the association information of the PDU session is the identification information of a QoS flow;
the determining unit 502 is configured to determine the PDU session corresponding to the data based on a corresponding relationship between the identification information of the QoS flow and the PDU session.

In an implementation manner, the device further includes:
a negotiation unit 504, configured to, when establishing or modifying a PDU session, negotiate and configure at least one of the following corresponding relationships with the terminal and a core network element:
the corresponding relationship between the address information of the PDU session and the PDU session, and the corresponding relationship between the address information of the PDU session and the PDU session channel.

In an implementation manner, the determining unit 502 is further configured to determine at least one of the following corresponding relationships based on a preset protocol:
the corresponding relationship between the address information of the PDU session and the PDU session, and the corresponding relationship between the address information of the PDU session and the PDU session channel.

In an implementation manner, the device further includes:
a negotiation unit 504, configured to, when the PDU session is established or modified, negotiate and configure with the terminal and the core network element the following corresponding relationship: the corresponding relationship between the identification information of the QoS flow and the PDU session.

In an implementation manner, the determining unit 502 is further configured to determine the following corresponding relationship based on a preset protocol: the corresponding relationship between the identification information of the QoS flow and the PDU session.

In an implementation manner, the negotiation unit 504 is configured to configure the corresponding relationship, and send the configured corresponding relationship to the terminal and the core network element; or, receive the corresponding relationship configured by the terminal or the core network element.

Those skilled in the art should understand that the implementation functions of the units in the data transmission device shown in Fig. 5 can be understood by referring to the related description of the foregoing data transmission method. The functions of the units in the data transmission device shown in Fig. 5 may be implemented by a program running on a processor, or may be implemented by a specific logic circuit.

If the data transmission device in the embodiments of the present disclosure is implemented in the form of a software functional module and sold or used as an independent product, it may also be stored in a computer-readable storage medium. Based on such an understanding, the part of the technical solutions of the embodiments of the present disclosure that is essential or contributes to the related art can be embodied in the form of software product. The computer software product is stored in a storage medium and includes several instructions for enabling a computer device (which may be a personal computer, a server, or a network device) to perform all or part of the methods described in the embodiments of the present disclosure. The above storage medium includes various media that can store program codes, such as a U disk, a mobile hard disk, a Read Only Memory (ROM), a magnetic disk, or an optical disk. In this way, the embodiments of the present disclosure are not limited to any specific combination of hardware and software.

Correspondingly, an embodiment of the present disclosure further provides a computer storage medium in which computer-executable instructions are stored. When the computer-executable instructions are executed by a processor, the foregoing data transmission method of the embodiment of the present disclosure is implemented.

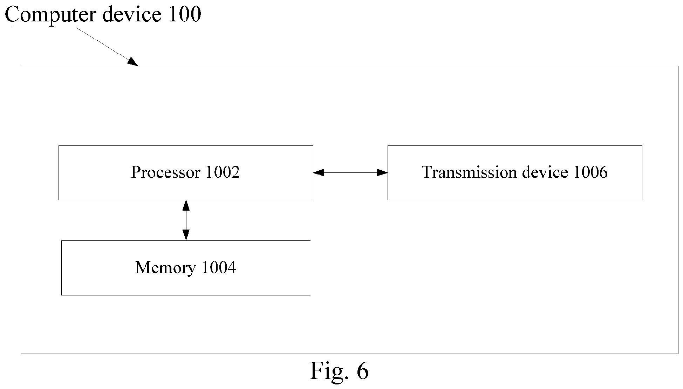

Fig. 6 is a structural composition diagram of a computer device according to an embodiment of the present disclosure. The computer device according to the embodiment of the present disclosure may be a terminal or a network device (such as an access network element). As shown in Fig. 6, the computer device 100 may include one or more (only one shown in the figure) processors 1002 (the processor 1002 may include, but is not limited to, a microprocessor (MCU, Micro Controller Unit) or a programmable logic device (FPGA, Field Programmable Gate Array), and other processing device), a memory 1004 for storing data, and a transmission device 1006 for a communication function. The person skilled in the art can understand that the structure shown in Fig. 6 is only schematic, and it does not limit the structure of the above electronic device. For example, the computer device 100 may also include more or fewer components than those shown in Fig. 6 or have a different configuration from that shown in Fig. 6.

The memory 1004 may be used to store software programs and modules of application software, such as program instructions/modules corresponding to the data transmission method in the embodiment of the present disclosure. The processor 1002 executes various software programs and modules stored in the memory 1004 to execute various function applications and data processing, that is, to implement the above method. The memory 1004 may include a high-speed random access memory, and may further include a non-volatile memory, such as one or more magnetic storage devices, a flash memory, or other non-volatile solid-state memory. In some examples, the memory 1004 may further include memories remotely set with respect to the processor 1002, and these remote memories may be connected to the computer device 100 through a network. Examples of the above network include, but are not limited to, the Internet, the intranet, the local area network, the mobile communication network, and combinations thereof.

The transmission device 1006 is used for receiving or sending data via a network. The specific examples of the above network may include a wireless network provided by a communication provider of the computer device 100. In one example, the transmission device 1006 includes a network adapter (NIC, Network Interface Controller), which can be connected to other network devices through a base station so as to communicate with the Internet. In one example, the transmission device 1006 may be a radio frequency (RF) module, which is used to communicate with the Internet in a wireless manner.

The technical solutions described in the embodiments of the present disclosure can be arbitrarily combined if there is no confliction.

In the several embodiments provided by the present disclosure, it should be understood that the disclosed method and smart device may be implemented in other ways. The device embodiments described above are only schematic. For example, the division of the unit is only a logical function division. In actual implementation, there may be other division manner, for example, multiple units or components may be combined or may be integrated into another system, or some features may be ignored or not implemented. In addition, the coupling, direct coupling or communication connection among the displayed or discussed components may be implemented through some interfaces, or indirect coupling or communication connection of the device or unit, and may be electrical, mechanical, or other forms.

The units described above as separate components may or may not be physically separated, and the components displayed as units may or may not be physical units, which may be located in one place or distributed to multiple network units; and some or all of the units may be selected according to actual needs to achieve the objective of the solution of this embodiment.

In addition, each functional unit in each embodiment of the present disclosure may be integrated into a second processing unit, or each unit may be separately used as a unit, or two or more units may be integrated into a unit; and the above integrated unit may be implemented in the form of hardware, or in the form of hardware plus software functional units.

The above contents are only specific embodiments of the present disclosure, and the protection scope of the present disclosure is not limited thereto. Any person skilled in the art can easily think of changes or replacements within the technical scope disclosed by the present disclosure, which should be covered by the protection scope of the present disclosure.

## Claims

1. A wireless data transmission method, comprising:
receiving (301), by a terminal, data sent by an access network element and determining a protocol data unit, PDU, session corresponding to the data; and
transmitting (302), by the terminal, the data to a protocol layer entity corresponding to the PDU session according to the PDU session corresponding to the data;
wherein the receiving (301), by the terminal, the data sent by the access network element and determining the PDU session corresponding to the data comprises:
when the terminal receives the data sent by the access network element, extracting association information of the PDU session from the data; and
determining, by the terminal, the PDU session corresponding to the data based on the association information of the PDU session;
wherein the association information of the PDU session is
address information of the PDU session or identification information of a quality of service, QoS, flow;
**characterized in that**, the determining, by the terminal, the PDU session corresponding to the data based on the association information of the PDU session comprises:
determining, by the terminal, the PDU session corresponding to the data based on a corresponding relationship between the address information of the PDU session and the PDU session, or
determining, by the terminal, the PDU session corresponding to the data based on a corresponding relationship between the identification information of the QoS flow and the PDU session,
wherein the method further comprises:
when establishing or modifying the PDU session, configuring among the terminal, the access network element and a core network element a following corresponding relationship: the corresponding relationship between the address information of the PDU session and the PDU session or the corresponding relationship between the identification information of the QoS flow and the PDU session, or
determining, by the terminal, a following corresponding relationship based on a preset protocol: the corresponding relationship between the address information of the PDU session and the PDU session or the corresponding relationship between the identification information of the QoS flow and the PDU session.

2. The method according to claim 1, wherein the configuring the corresponding relationship among the terminal, the access network element and the core network element comprises:
configuring the corresponding relationship and sending the configured corresponding relationship to the access network element and the core network element by the terminal; or
receiving, by the terminal, the corresponding relationship configured by the access network element or the core network element.

3. The method according to claim 1 or 2, wherein the transmitting the data to the protocol layer entity corresponding to the PDU session comprises:
transmitting the data to an IP entity or an SMS Function, SMSF, entity corresponding to the PDU session.

4. A wireless data transmission method, comprising:
receiving (401) data sent by a terminal and determining a PDU session corresponding to the data by an access network element; and
according to the PDU session corresponding to the data, transmitting (402) the data to a channel corresponding to the PDU session and transmitting the data to a core network element based on the channel by the access network element;
wherein the receiving the data sent by the terminal and determining the PDU session corresponding to the data by the access network element comprises:
when the access network element receives the data sent by the terminal, extracting association information of a PDU session from the data; and
determining, by the access network element, the PDU session corresponding to the data based on the association information of the PDU session;
wherein the association information of the PDU session is address information of the PDU session or identification information of a QoS flow;
**characterized in that**, the determining, by the access network element, the PDU session corresponding to the data based on the association information of the PDU session comprises:
determining, by the access network element, the PDU session corresponding to the data based on a corresponding relationship between the address information of the PDU session and the PDU session, or
determining, by the access network element, the PDU session corresponding to the data based on a corresponding relationship between the identification information of the QoS flow and the PDU session,
wherein the method further comprises:
when establishing or modifying the PDU session, configuring among the access network element, the terminal and a core network element a following corresponding relationship: the corresponding relationship between the address information of the PDU session and the PDU session or the corresponding relationship between the identification information of the QoS flow and the PDU session, or
determining, by the access network element, a following corresponding relationship based on a preset protocol: the corresponding relationship between the address information of the PDU session and the PDU session or the corresponding relationship between the identification information of the QoS flow and the PDU session.

5. A wireless data transmission device (100), comprising:
a processor (1002); and
a memory (1004) for storing instructions executable by the processor;
wherein the processor, when executing the instructions, is configured to perform the data transmission method according to any one of claims 1-4.

6. A computer storage medium storing computer-executable instructions which, when executed by a processor, implement the method steps according to any one of claims 1-3, or the method steps according to claim 4.

## Patentansprüche

1. Drahtloses Datenübertragungsverfahren, umfassend:
Empfangen (301), durch ein Endgerät, von Daten, die von einem Zugangsnetzelement gesendet wurden, und Bestimmen einer Protokolldateneinheit, PDU (Protocol Data Unit)-Sitzung, die den Daten entspricht; und
Übertragen (302), durch das Endgerät, an eine der PDU-Sitzung entsprechende Protokollschicht-Entität gemäß der PDU-Sitzung, die den Daten entspricht;
wobei das Empfangen (301), durch das Endgerät, der Daten, die vom Zugangsnetzelement gesendet wurden, und das Bestimmen der PDU-Sitzung, die den Daten entspricht, umfasst:
wenn das Endgerät die Daten empfängt, die vom Zugangsnetzelement gesendet wurden, Extrahieren von Assoziierungsinformationen der PDU-Sitzung aus den Daten; und
Bestimmen, durch das Endgerät, der PDU-Sitzung, die den Daten entspricht, basierend auf den Assoziierungsinformationen der PDU-Sitzung;
wobei die Assoziierungsinformationen der PDU-Sitzung beinhalten:
Adressinformationen der PDU-Sitzung oder Identifikationsinformationen eines Dienstgüte-Flusses (QoS, Quality of Service);
**dadurch gekennzeichnet, dass** das Bestimmen, durch das Endgerät, der PDU-Sitzung, die den Daten entspricht, basierend auf den Assoziierungsinformationen der PDU-Sitzung umfasst:
Bestimmen, durch das Endgerät, der PDU-Sitzung, die den Daten entspricht, basierend auf einer entsprechenden Beziehung zwischen den Adressinformationen der PDU-Sitzung und der PDU-Sitzung, oder
Bestimmen, durch das Endgerät, der PDU-Sitzung, die den Daten entspricht, basierend auf einer entsprechenden Beziehung zwischen den Identifikationsinformationen des QoS-Flusses und der PDU-Sitzung,
wobei das Verfahren ferner umfasst:
beim Einrichten oder Ändern der PDU-Sitzung zwischen dem Endgerät, dem Zugangsnetzelement und einem Kernnetzelement, Konfigurieren einer folgenden entsprechenden Beziehung: die entsprechende Beziehung zwischen den Adressinformationen der PDU-Sitzung und der PDU-Sitzung oder die entsprechende Beziehung zwischen den Identifikationsinformationen des QoS-Flusses und der PDU-Sitzung oder
Bestimmen, durch das Endgerät, einer folgenden entsprechenden Beziehung basierend auf einem voreingestellten Protokoll: die entsprechende Beziehung zwischen den Adressinformationen der PDU-Sitzung und der PDU-Sitzung oder die entsprechende Beziehung zwischen den Identifikationsinformationen des QoS-Flusses und der PDU-Sitzung.

2. Verfahren gemäß Anspruch 1, wobei das Konfigurieren der entsprechenden Beziehung zwischen dem Endgerät, dem Zugangsnetzelement und dem Kernnetzelement umfasst:
Konfigurieren der entsprechenden Beziehung und Senden der konfigurierten entsprechenden Beziehung an das Zugangsnetzelement und das Kernnetzelement durch das Endgerät; oder
Empfangen, durch das Endgerät, der entsprechenden Beziehung, die vom Zugangsnetzelement oder vom Kernnetzelement konfiguriert wurde.

3. Verfahren gemäß Anspruch 1 oder 2, wobei das Übertragen der Daten an die der PDU-Sitzung entsprechende Protokollschicht-Entität umfasst:
Übertragen der Daten an eine der PDU-Sitzung entsprechende IP-Entität oder eine SMS-Funktions(SMSF)-Entität.

4. Drahtloses Datenübertragungsverfahren, umfassend:
Empfangen (401) von Daten, die von einem Endgerät gesendet wurden, und Bestimmen einer PDU-Sitzung, die den Daten entspricht, durch ein Zugangsnetzelement; und gemäß der PDU-Sitzung, die den Daten entspricht, Übertragen (402) der Daten an einen der PDU-Sitzung entsprechenden Kanal und Übertragen der Daten an ein Kernnetzelement basierend auf dem Kanal durch das Zugangsnetzelement;
wobei das Empfangen der Daten, die vom Endgerät gesendet wurden, und das Bestimmen der PDU-Sitzung, die den Daten entspricht, durch das Zugangsnetzelement umfasst:
wenn das Zugangsnetzelement die Daten empfängt, die vom Endgerät gesendet wurden, Extrahieren von Assoziierungsinformationen einer PDU-Sitzung aus den Daten; und
Bestimmen, durch das Zugangsnetzelement, der PDU-Sitzung, die den Daten entspricht, basierend auf den Assoziierungsinformationen der PDU-Sitzung;
wobei die Assoziierungsinformationen der PDU-Sitzung Adressinformationen der PDU-Sitzung oder Identifizierungsinformationen eines QoS-Flusses sind;
**dadurch gekennzeichnet, dass** das Bestimmen, durch das Zugangsnetzelement, der PDU-Sitzung, die den Daten entspricht, basierend auf den Assoziierungsinformationen der PDU-Sitzung umfasst:
Bestimmen, durch das Zugangsnetzelement, der PDU-Sitzung, die den Daten entspricht, basierend auf einer entsprechenden Beziehung zwischen den Adressinformationen der PDU-Sitzung und der PDU-Sitzung, oder
Bestimmen, durch das Zugangsnetzelement, der PDU-Sitzung, die den Daten entspricht, basierend auf einer entsprechenden Beziehung zwischen den Identifikationsinformationen des QoS-Flusses und der PDU-Sitzung,
wobei das Verfahren ferner umfasst:
beim Einrichten oder Ändern der PDU-Sitzung zwischen dem Zugangsnetzelement, dem Endgerät und einem Kernnetzelement, Konfigurieren einer folgenden entsprechenden Beziehung: die entsprechende Beziehung zwischen den Adressinformationen der PDU-Sitzung und der PDU-Sitzung oder die entsprechende Beziehung zwischen den Identifikationsinformationen des QoS-Flusses und der PDU-Sitzung oder
Bestimmen, durch das Zugangsnetzelement, einer folgenden entsprechenden Beziehung basierend auf einem voreingestellten Protokoll: die entsprechende Beziehung zwischen den Adressinformationen der PDU-Sitzung und der PDU-Sitzung oder die entsprechende Beziehung zwischen den Identifikationsinformationen des QoS-Flusses und der PDU-Sitzung.

5. Drahtlos-Datenübertragungsvorrichtung (100), umfassend:
einen Prozessor (1002); und
einen Speicher (1004) zum Speichern von Anweisungen, die vom Prozessor ausgeführt werden können;
wobei der Prozessor, wenn er die Anweisungen ausführt, dafür ausgelegt ist, das Verfahren zur Datenübertragung gemäß einem der Ansprüche 1-4 durchzuführen.

6. Computerspeichermedium, das von einem Computer ausführbare Anweisungen speichert, die, wenn sie von einem Prozessor ausgeführt werden, die Verfahrensschritte gemäß einem der Ansprüche 1-3 oder die Verfahrensschritte gemäß Anspruch 4 implementieren.

## Revendications

1. Procédé de transmission de données sans fil, comprenant :
la réception (301), par un terminal, de données envoyées par un élément de réseau d'accès et la détermination d'une session d'unité de données de protocole, PDU, correspondant aux données ; et
la transmission (302), par le terminal, des données à une entité de couche de protocole correspondant à la session PDU conformément à la session PDU correspondant aux données ;
dans lequel la réception (301), par le terminal, des données envoyées par l'élément de réseau d'accès et la détermination de la session PDU correspondant aux données comprennent :
lorsque le terminal reçoit les données envoyées par l'élément de réseau d'accès, l'extraction d'informations d'association de la session PDU à partir des données ; et
la détermination, par le terminal, de la session PDU correspondant aux données sur la base des informations d'association de la session PDU ;
dans lequel les informations d'association de la session PDU sont
des informations d'adresse de la session PDU ou des informations d'identification d'un flux de qualité de service, QoS ;
**caractérisé en ce que** la détermination, par le terminal, de la session PDU correspondant aux données sur la base des informations d'association de la session PDU comprend :
la détermination, par le terminal, de la session PDU correspondant aux données sur la base d'une relation de correspondance entre les informations d'adresse de la session PDU et la session PDU, ou
la détermination, par le terminal, de la session PDU correspondant aux données sur la base d'une relation de correspondance entre les informations d'identification du flux QoS et la session PDU,
dans lequel le procédé comprend en outre :
lors de l'établissement ou de la modification de la session PDU, la configuration, entre le terminal, l'élément de réseau d'accès et un élément de réseau central, d'une relation de correspondance suivante : la relation de correspondance entre les informations d'adresse de la session PDU et la session PDU ou la relation de correspondance entre les informations d'identification du flux QoS et la session PDU, ou
la détermination, par le terminal, d'une relation de correspondance suivante sur la base d'un protocole prédéfini : la relation de correspondance entre les informations d'adresse de la session PDU et la session PDU ou la relation de correspondance entre les informations d'identification du flux QoS et la session PDU.

2. Procédé selon la revendication 1, dans lequel la configuration de la relation de correspondance entre le terminal, l'élément de réseau d'accès et l'élément de réseau central comprend :
la configuration de la relation de correspondance et l'envoi de la relation de correspondance configurée à l'élément de réseau d'accès et à l'élément de réseau central par le terminal ; ou
la réception, par le terminal, de la relation de correspondance configurée par l'élément de réseau d'accès ou l'élément de réseau central.

3. Procédé selon la revendication 1 ou 2, dans lequel la transmission des données à l'entité de couche de protocole correspondant à la session PDU comprend :
la transmission des données à une entité IP ou à une entité de Fonction SMS, SMSF, correspondant à la session PDU.

4. Procédé de transmission de données sans fil, comprenant :
la réception (401) de données envoyées par un terminal et la détermination d'une session PDU correspondant aux données par un élément de réseau d'accès ; et
conformément à la session PDU correspondant aux données, la transmission (402) des données à un canal correspondant à la session PDU et la transmission des données à un élément de réseau central sur la base du canal, par l'élément de réseau d'accès ;
dans lequel la réception des données envoyées par le terminal et la détermination de la session PDU correspondant aux données par l'élément de réseau d'accès comprennent :
lorsque l'élément de réseau d'accès reçoit les données envoyées par le terminal, l'extraction d'informations d'association d'une session PDU à partir des données ; et
la détermination, par l'élément de réseau d'accès, de la session PDU correspondant aux données sur la base des informations d'association de la session PDU ;
dans lequel les informations d'association de la session PDU sont des informations d'adresse de la session PDU ou des informations d'identification d'un flux QoS ;
**caractérisé en ce que** la détermination, par l'élément de réseau d'accès, de la session PDU correspondant aux données sur la base des informations d'association de la session PDU comprend :
la détermination, par l'élément de réseau d'accès, de la session PDU correspondant aux données sur la base d'une relation de correspondance entre les informations d'adresse de la session PDU et la session PDU, ou
la détermination, par l'élément de réseau d'accès, de la session PDU correspondant aux données sur la base d'une relation de correspondance entre les informations d'identification du flux QoS et la session PDU,
dans lequel le procédé comprend en outre :
lors de l'établissement ou de la modification de la session PDU, la configuration, entre l'élément de réseau d'accès, le terminal et un élément de réseau central, d'une une relation de correspondance suivante : la relation de correspondance entre les informations d'adresse de la session PDU et la session PDU ou la relation de correspondance entre les informations d'identification du flux QoS et la session PDU, ou
la détermination, par l'élément de réseau d'accès, d'une relation de correspondance suivante sur la base d'un protocole prédéfini : la relation de correspondance entre les informations d'adresse de la session PDU et la session PDU ou la relation de correspondance entre les informations d'identification du flux QoS et la session PDU.

5. Dispositif de transmission de données sans fil (100), comprenant :
un processeur (1002) ; et
une mémoire (1004) pour stocker des instructions exécutables par le processeur ;
dans lequel le processeur, lorsqu'il exécute les instructions, est configuré pour mettre en œuvre le procédé de transmission de données selon l'une quelconque des revendications 1-4.

6. Support de stockage informatique stockant des instructions exécutables par ordinateur qui, lorsqu'elles sont exécutées par un processeur, mettent en œuvre les étapes du procédé selon l'une quelconque des revendications 1-3, ou les étapes du procédé selon la revendication 4.
